# FASCICULE DE BREVET EUROPEEN

(11) **EP 2 846 520 B1**
(45) Date de publication et mention de la délivrance du brevet: **20.07.2016**
(21) Numéro de dépôt: 14180189.4
(22) Date de dépôt: 07.08.2014
(51) Int. Cl.: H04M 1/57, H04L 29/06

(54) **Procédé et dispositif d'enrichissement d'une communication**
Vorrichtung und Verfahren zur Anreicherung einer Kommunikation
Method and device for enriching communication

(30) Priorité: 26.08.2013 FR 1358179
(43) Date de publication de la demande: 11.03.2015
(73) Titulaire: Orange, 75015 Paris (FR)
(72) Inventeur: Moncomble, Ghislain, 22310 Plestin les Grèves (FR); Meurisse, Jean-Sebastien, 22700 Louannec (FR)

(56) Documents cités:
- EP-A2- 1 211 875
- WO-A2-01/93507
- US-A1- 2010 159 942

## Description

### Domaine de l'invention

L'invention se situe dans le domaine des réseaux de télécommunication. Elle concerne un dispositif et un procédé d'enrichissement d'une communication.

### Art antérieur

Il est aujourd'hui possible d'établir des communications entre des terminaux d'utilisateur selon différents modes de communication, notamment des communications audio, vidéo, texte, tableau blanc, etc... Avec l'essor de nouveaux protocoles de communication tel que le protocole RCS (Rich Suite Communication) par exemple, un utilisateur peut partager des images, des vidéos, des contenus multimédia avec un interlocuteur au cours d'une communication téléphonique ou visiophonique.

De plus, il est aujourd'hui possible d'enrichir une communication par l'ajout de contenus qui sont présentés sur le terminal d'un utilisateur participant à la communication. Par exemple, le document US20100159942A1 décrit un procédé permettant d'afficher sur l'écran d'un terminal d'un premier utilisateur en communication avec un second utilisateur, des informations complémentaires selon le contexte de la communication, par exemple le nom et une photo du second utilisateur, une indication de la localisation du second utilisateur, et des informations en rapport avec cette localisation telles que la météo, des informations d'actualités.

Pour établir des communications enrichies, un utilisateur peut aujourd'hui utiliser des terminaux disposant de caractéristiques très différentes, notamment en termes de capacités de traitement des données et d'affichage.

Par exemple, un utilisateur peut utiliser un terminal, de type mobile, pour établir une communication avec un utilisateur disposant d'un terminal de type softphone, autrement appelé téléphone logiciel, installé sur un ordinateur personnel ou une télévision HD (Haute Définition) connectée au réseau IP (Internet Protocol).

Les communications peuvent également être établies sur des réseaux de communication ayant des capacités de transmission différentes et plus ou moins fluctuantes d'un point de vue du débit, impactant alors la qualité de la communication.

De ce fait, la qualité d'une communication enrichie entre deux interlocuteurs dépend notamment des capacités des terminaux et des réseaux de communication utilisés.

### Exposé de l'invention

Un des buts de l'invention est d'apporter des améliorations par rapport à l'état de la technique. Elle propose à cet effet un procédé d'enrichissement d'une communication établie entre au moins un terminal émetteur et un terminal récepteur, comprenant une étape de réception par le terminal récepteur d'au moins une information d'enrichissement. Le procédé d'enrichissement comprend en outre:
- une étape d'obtention d'au moins un paramètre relatif à la communication,
- une étape de détermination en fonction du paramètre relatif à la communication obtenu, d'au moins un modèle de restitution permettant de positionner, sur un dispositif d'affichage associé au terminal récepteur, ladite information d'enrichissement et une information visuelle de la communication, et
- une étape de restitution, sur le terminal récepteur, de ladite information d'enrichissement et de l'information visuelle de la communication, selon le modèle de restitution déterminé.

Le procédé de communication permet ainsi de prendre en compte les paramètres de la communication afin d'adapter la restitution, sur un dispositif d'affichage associé au terminal récepteur, des informations d'enrichissement et d'un flux visuel de la communication. Un flux visuel de la communication correspond par exemple au flux vidéo de la communication dans le cas d'une communication en vidéophonie ou visiophonie, ou à une image de l'utilisateur du terminal émetteur, ou simplement à une icône ou un message indiquant qu'une communication est en cours avec untel. Un tel flux visuel de la communication correspond donc à une information visuelle de la communication.

Les paramètres relatifs à la communication correspondent par exemple à la capacité de transmission du réseau de communication auquel est connecté le terminal récepteur ou à la capacité de transmission du réseau de communication auquel est connecté le terminal émetteur, à la capacité de traitement ou d'affichage du terminal récepteur ou du terminal émetteur, ou au type ou à la quantité des informations d'enrichissement reçues par le terminal récepteur.

Selon l'invention, un modèle de restitution correspond au mode d'affichage des données reçues par le terminal récepteur. Un modèle de restitution comprend notamment des paramètres relatifs à l'emplacement d'une information à afficher sur un dispositif d'affichage associé au terminal récepteur. Ainsi, à chaque information à afficher, le modèle de restitution associe un paramètre de positionnement spatial sur une interface d'affichage. Chaque paramètre spatial peut également être associé à un type d'information à afficher (image, vidéo, son, texte, etc...).

L'affichage des informations d'enrichissement et du flux visuel de la communication selon un modèle de restitution déterminé permet d'offrir un rendu de type vidéo à l'utilisateur du terminal récepteur. Les informations d'enrichissement et le flux visuel de la communication sont positionnés automatiquement sur son écran de manière optimisée en fonction des capacités d'affichage du terminal récepteur, sans que l'utilisateur ait besoin d'intervenir sur l'affichage.

Les différents modes ou caractéristiques de réalisation mentionnés ci-après peuvent être ajoutés indépendamment ou en combinaison les uns avec les autres, aux étapes du procédé d'enrichissement défini ci-dessus.

Selon un mode particulier de réalisation de l'invention, lorsque l'information visuelle de la communication correspond à un flux visiophonique de la communication et que le paramètre relatif à la communication correspond à l'ajout d'un flux vidéo à la communication, le modèle de restitution déterminé correspond à un modèle de restitution permettant de restituer l'information visuelle de la communication sous la forme d'une image issue du flux visiophonique ou sous la forme d'une image d'un utilisateur du terminal émetteur. Selon ce mode particulier de réalisation de l'invention, le flux vidéo ajouté à la communication correspond à l'information d'enrichissement reçue par le terminal récepteur.

Ce mode particulier de réalisation de l'invention permet, lorsqu'un flux vidéo d'enrichissement est ajouté à la communication, de basculer l'affichage du flux visiophonique de la communication en un affichage en mode image.

Ce mode particulier de réalisation de l'invention permet d'optimiser l'utilisation des capacités de traitement du terminal récepteur, notamment lorsque les capacités de traitement du terminal récepteur sont limitées. Par exemple, le terminal récepteur peut ne pas avoir suffisamment de ressources pour décoder et afficher le flux visiophonique de la communication et le flux vidéo d'enrichissement ajouté. Selon ce mode particulier de réalisation de l'invention, le terminal récepteur ne restitue ainsi qu'un seul flux vidéo à la fois. La batterie du terminal récepteur est optimisée et la restitution du flux vidéo est plus fluide que si deux flux vidéo devaient être restitués par le terminal récepteur. Selon ce mode particulier de réalisation de l'invention, l'utilisateur du terminal récepteur conserve une information visuelle de la communication qui est affichée sous la forme d'une image. Par exemple, le terminal récepteur affiche une image issue du flux visiophonique. Une telle image peut être mise à jour régulièrement au cours de la communication à partir du flux visiophonique reçu.

Selon un autre exemple, le terminal récepteur affiche une image de l'utilisateur du terminal émetteur, qui est par exemple stockée dans une mémoire du terminal récepteur.

Selon un autre mode particulier de réalisation de l'invention, lorsque la restitution du flux vidéo d'enrichissement ajouté est terminée, l'étape de détermination d'un modèle de restitution est itérée pour déterminer un nouveau modèle de restitution permettant de restituer l'information visuelle de la communication sous la forme d'un flux visiophonique.

Ce mode particulier de réalisation de l'invention permet au terminal récepteur de rebasculer automatiquement l'affichage de l'information visuelle de la communication du mode image au mode visiophonique. Le cours de la communication en mode visiophonique peut ainsi reprendre entre les deux interlocuteurs sans nécessiter d'intervention manuelle de l'un ou l'autre des interlocuteurs.

Selon un autre mode particulier de réalisation de l'invention, le modèle de restitution déterminé comprend un paramètre temporel associé à ladite information d'enrichissement.

Dans ce mode particulier de réalisation de l'invention, les informations d'enrichissement sont également positionnées temporellement au cours de la communication. Les informations d'enrichissement sont affichées à partir d'un instant temporel et pendant une durée d'affichage qui sont déterminés par le modèle de restitution. Ainsi, le modèle de restitution permet au cours de la communication de rafraichir les informations d'enrichissement affichées.

Selon ce mode particulier de réalisation de l'invention, chaque information d'enrichissement restituée selon le modèle de restitution déterminé peut varier de façon indépendante des autres informations d'enrichissement restituées ou à restituer. Chaque information d'enrichissement est associée à ses propres paramètres temporels : instant d'affichage, durée d'affichage prédéterminée. Les paramètres temporels d'une information d'enrichissement sont également indépendants de la durée du modèle de restitution. Par exemple, pour un modèle de restitution devant durer 14 secondes maximum, ce mode particulier de réalisation permet d'afficher dans une première zone d'affichage en sous-titre les deux derniers SMS échangés entre le terminal émetteur et le terminal récepteur, chacun pendant 7 secondes, et dans une seconde zone d'affichage, de faire défiler trois photos durant 4 secondes chacune avec un effet de transition de 1 seconde entre chaque photo.

Selon un mode particulier de réalisation de l'invention, le modèle de restitution est déterminé pour un intervalle de temps prédéterminé ou jusqu'à l'occurrence d'un évènement déclencheur d'une itération de l'étape de détermination d'un modèle de restitution.

Dans ce mode particulier de réalisation de l'invention, le procédé d'enrichissement permet d'adapter automatiquement au cours de la communication, le modèle de restitution des informations d'enrichissement et du flux visuel de la communication. Le procédé d'enrichissement offre ainsi un affichage dynamique des informations d'enrichissement et du flux visuel de la communication.

Selon un autre exemple, le modèle de restitution déterminé est utilisé pour la restitution des informations d'enrichissement pendant une durée prédéterminée. Lorsque cette durée atteint une valeur prédéterminée, le procédé change de modèle de restitution. L'affichage sur le dispositif associé au terminal récepteur est alors modifié, permettant ainsi de capter l'attention de l'utilisateur du terminal récepteur plus longtemps.

Ce mode particulier de réalisation de l'invention permet un affichage dynamique des informations d'enrichissement.

Selon un autre mode particulier de réalisation de l'invention, l'évènement déclencheur d'une itération de l'étape de détermination d'un modèle de restitution correspond à la détection de la modification d'au moins un paramètre relatif à la communication.

Selon ce mode particulier de réalisation de l'invention, le procédé adapte la restitution des informations d'enrichissement de la communication en fonction du contexte de la communication. Par exemple, si la communication est établie sur un réseau à débit variable, la quantité et la qualité des informations d'enrichissement et des flux de données de la communication varient. Par exemple, selon ce mode particulier de réalisation de l'invention, si la qualité du flux vidéo de la communication visiophonique n'est plus suffisante à cause d'une diminution de la bande passante du réseau de communication auquel est connecté le terminal émetteur, la taille d'affichage de ce flux diminue ou seulement quelques images de la vidéo sont reçues et affichées sur le terminal récepteur. En complément, si le débit du réseau de communication auquel est connecté le terminal récepteur le permet, des informations d'enrichissements supplémentaires sont transmises au terminal récepteur et affichées selon le modèle de restitution adapté.

L'obtention d'informations d'enrichissement permet ainsi d'optimiser l'utilisation des capacités du terminal récepteur malgré les contraintes de débit (faible bande passante, qualité de service non garantie, etc...) du réseau de communication auquel est connecté le terminal émetteur.

Selon un autre mode particulier de réalisation de l'invention, l'évènement déclencheur d'une itération de l'étape de détermination d'un modèle de restitution correspond à une interaction utilisateur effectuée sur le terminal récepteur.

Selon ce mode particulier de réalisation de l'invention, l'utilisateur du terminal récepteur peut modifier la manière dont les informations d'enrichissement et les flux de données de la communication lui sont restitués. Par exemple, si certaines informations d'enrichissement présentées ne lui semblent pas pertinentes par rapport à la communication ou à son interlocuteur, l'utilisateur peut choisir de ne pas les restituer.

Selon un autre exemple, l'utilisateur peut choisir de restituer des informations d'enrichissement qui ne lui étaient pas présentées initialement par le procédé, par exemple ajouter aux informations d'enrichissement, des données échangées lors de communications précédentes, telles que SMS, MMS, courriers électroniques, etc... Le procédé d'enrichissement adapte alors le modèle de restitution préalablement déterminé en fonction de la sélection de l'utilisateur pour restituer les informations d'enrichissement ajoutées.

Selon un autre mode particulier de réalisation de l'invention, le modèle de restitution est déterminé par une sélection d'un modèle de restitution parmi un groupe de modèles de restitution préalablement déterminés, ladite sélection étant effectuée en fonction de l'information d'enrichissement à restituer ou des capacités du terminal récepteur.

Selon ce mode particulier de réalisation de l'invention, le modèle de restitution est déterminé en sélectionnant un modèle de restitution préalablement stocké. La sélection d'un modèle de restitution existant permet d'obtenir facilement les paramètres du modèle de restitution à appliquer aux flux de données de la communication et aux informations d'enrichissement. La mise en oeuvre du procédé selon ce mode particulier de réalisation est ainsi simplifiée.

La sélection d'un modèle de restitution préalablement stocké peut être effectuée selon le type d'informations d'enrichissement à restituer par le terminal récepteur. Par exemple, si l'utilisateur du terminal émetteur a sélectionné un ensemble d'images à afficher sur le terminal récepteur, le terminal récepteur ou le terminal émetteur sélectionne un modèle de restitution permettant d'afficher chaque image sélectionnée pendant une durée prédéterminée.

Selon un autre mode particulier de réalisation de l'invention, l'information d'enrichissement reçue est définie en fonction du modèle de restitution déterminé.

Selon ce mode particulier de réalisation de l'invention, les informations d'enrichissement sont obtenues par le terminal récepteur en fonction du modèle de restitution déterminé.

Par exemple, si l'utilisateur du terminal émetteur accepte de divulguer sa localisation, un modèle de restitution permettant d'afficher des informations d'enrichissement associées à la localisation du terminal émetteur est déterminé.

Ce mode particulier de réalisation de l'invention permet, lorsqu'un modèle de restitution est déterminé à partir d'un paramètre de la communication, de recevoir des informations d'enrichissement associées au modèle de restitution. Par exemple, le modèle de restitution déterminé précise une catégorie d"informations d'enrichissement à restituer (localisation, météo, actualités, données personnelles, etc...), ou le modèle de restitution déterminé indique le type de d'informations à restituer (images, vidéo, texte, audio, etc...).

Selon un autre mode particulier de réalisation de l'invention, le modèle de restitution est déterminé par le terminal émetteur.

Selon ce mode particulier de réalisation de l'invention, le modèle de restitution est par exemple déterminé en fonction du type d'informations d'enrichissements que l'utilisateur du terminal émetteur souhaite que le terminal récepteur restitue. Par exemple, si l'utilisateur du terminal émetteur sélectionne un ensemble d'images à transmettre au terminal récepteur sous la forme d'un diaporama, le terminal émetteur détermine un modèle de restitution comprenant des paramètres d'affichage d'une image de l'ensemble d'images à intervalle régulier et pendant une durée prédéterminée.

Selon un mode particulier de réalisation de l'invention, le procédé d'enrichissement d'une communication comprend une étape d'envoi au terminal récepteur d'une donnée représentative du modèle de restitution déterminé.

La donnée représentative du modèle de restitution envoyée au terminal récepteur correspond par exemple aux paramètres du modèle de restitution à appliquer aux informations d'enrichissement reçues par le terminal récepteur et au flux visuel de la communication.

En variante, la donnée représentative du modèle de restitution permet au terminal récepteur d'obtenir les paramètres du modèle de restitution, par exemple lorsque le modèle de restitution est un modèle qui a été déjà prédéfini. Lesdits paramètres sont alors stockés dans une mémoire à laquelle le terminal récepteur peut accéder.

L'invention concerne également un dispositif d'enrichissement d'une communication établie entre au moins un terminal émetteur et un terminal récepteur, comprenant des moyens de réception d'au moins une information d'enrichissement. Le dispositif comprend en outre:
- des moyens d'obtention d'un paramètre relatif à la communication,
- des moyens de détermination en fonction du paramètre relatif à la communication, d'un modèle de restitution permettant de positionner, sur un dispositif d'affichage associé au terminal récepteur, ladite information d'enrichissement et une information visuelle de la communication,
- des moyens de restitution de ladite information d'enrichissement et de l'information visuelle de la communication, selon le modèle de restitution déterminé.

L'invention concerne aussi un terminal comprenant un dispositif d'enrichissement d'une communication tel que décrit ci-dessus.

L'invention concerne aussi un serveur comprenant un dispositif d'enrichissement d'une communication tel que décrit ci-dessus.

L'invention concerne aussi un message à destination d'un terminal récepteur, émis au cours d'une communication établie entre le terminal récepteur et au moins un terminal émetteur, le terminal récepteur recevant au moins une information d'enrichissement de la communication. Le message comprend au moins une donnée représentative d'un modèle de restitution déterminé en fonction d'un paramètre relatif à la communication et permettant de positionner, sur un dispositif d'affichage associé au terminal récepteur, ladite information d'enrichissement et une information visuelle de la communication, ladite information d'enrichissement et l'information visuelle de la communication étant restitués selon le modèle de restitution déterminé.

Dans un mode particulier de réalisation, les différentes étapes du procédé d'enrichissement d'une communication sont mises en oeuvre par des instructions de programmes d'ordinateur.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes du procédé d'enrichissement qui vient d'être décrit.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé d'enrichissement en question.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en oeuvre de l'invention selon un mode particulier de réalisation,
- la figure 2 illustre des étapes du procédé d'enrichissement d'une communication selon un mode particulier de réalisation de l'invention,
- les figures 3A et 3B illustrent schématiquement des exemples d'interface de modèle de restitution selon un mode particulier de réalisation de l'invention,
- la figure 4 illustre un message comprenant une donnée représentative d'un modèle de restitution reçu par un terminal selon un mode particulier de réalisation de l'invention,
- la figure 5 illustre un dispositif permettant de mettre en oeuvre le procédé d'enrichissement d'une communication selon un mode particulier de réalisation de l'invention.

### Description d'un mode particulier de réalisation de l'invention

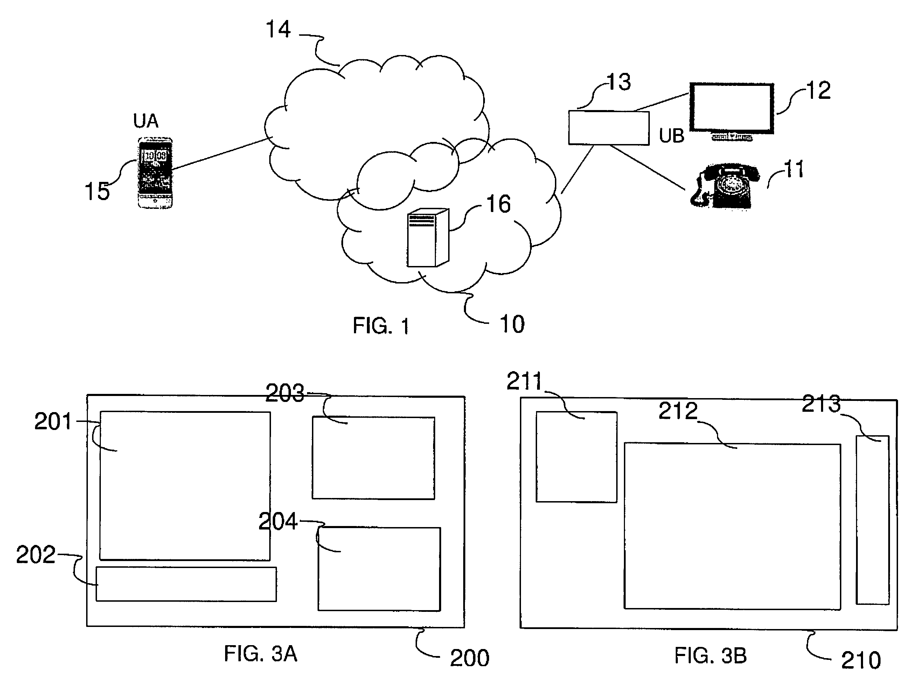

La figure 1 illustre un environnement de mise en oeuvre de l'invention selon un mode particulier de réalisation. L'environnement comprend un groupe de réseaux de communication 10 et 14 auquel sont connectés des terminaux 11, 12 et 15, une passerelle domestique 13 et un serveur d'informations d'enrichissement 16.

Les terminaux 11, 12 et 15 peuvent être tout type de terminaux permettant d'établir une communication téléphonique ou visiophonique, tels qu'un téléphone portable, un smartphone (téléphone intelligent en anglais), une tablette, une télévision connectée à un réseau de télécommunications, un ordinateur personnel sur lequel une application de téléphonie, aussi appelé softphone, est installée.

Dans l'exemple décrit ici, le terminal 15 est un terminal de type smartphone associé à un utilisateur UA. Le terminal 15 est connecté au réseau de communication 14 et peut émettre et recevoir tout type de communications, via le réseau de communication 14. Par exemple, le réseau de communication 14 est un réseau de communications mobile de type GSM, EDGE, 3G, 3G+, 4G... Il peut être mis en oeuvre par une architecture de type RCS.

Dans l'environnement décrit en relation avec la figure 1, un utilisateur UB dispose par exemple d'un terminal fixe 11 de type DECT (pour Digital Enhanced Cordless Telephone) et d'un terminal 12 de type télévision connectée. Les terminaux 11 et 12 sont connectés à une passerelle domestique 13 permettant aux terminaux d'accéder au réseau de communication 10. Le réseau de communication 10 peut correspondre à un réseau IP (pour Internet Protocol en anglais). Le réseau de communication 10 est par exemple mis en oeuvre par une architecture de type IMS (pour IP Multimedia Subsystem).

Le réseau de communication 10 et le réseau de communication 14 sont interconnectés entre eux par l'intermédiaire de serveurs d'interconnexion (non représentés). Le réseau de communication 10 et le réseau de communication 14 permettent d'échanger des données et d'établir des communications entre des terminaux connectés au réseau de communication 10 ou au réseau de communication 14.

L'utilisateur UB peut émettre et recevoir des communications téléphoniques classiques (type RTC) grâce à son terminal 11. Grâce à son terminal 12, l'utilisateur UB peut émettre et recevoir des communications de type VoIP (Voice Over IP) en mode voix ou visiophonique.

Le serveur d'informations d'enrichissement 16 est par exemple connecté au réseau de communication 10, il peut aussi être connecté au réseau de communication 14. Le serveur d'informations d'enrichissement 16 permet, sur requête, de fournir des informations d'enrichissement de type images, vidéos, textes, sons, susceptibles d'être restituées sur un terminal au cours d'une communication.

Par exemple, le serveur 16 fournit des informations relatives à la localisation d'un terminal indiquée dans une requête de demande d'informations d'enrichissement envoyée au serveur 16. De telles informations peuvent être une carte géographique représentant la localisation du terminal, une information sur la météo relative à cette localisation, des données d'actualités relatives à la localisation, des images, ou des vidéos relatives à la localisation. En variante, le serveur 16 fournit des informations d'enrichissement relatives au jour, à la saison ou à l'heure à laquelle la requête est reçue. Par exemple, si la requête de demande d'informations d'enrichissement est émise en hiver, les photos fournies par le serveur 16 représenteront le lieu de la localisation en hiver. Si la requête est émise la nuit, les photos fournies par le serveur 16 représenteront le lieu de la localisation photographié de nuit, etc...

Selon un autre exemple, le serveur 16 fournit des informations relatives à une communication en cours, par exemple entre le terminal 12 et le terminal 15, telles qu'une transcription en texte de la communication audio entre les deux terminaux, ou une traduction en texte ou en mode audio dans une autre langue de la communication audio.

Les terminaux 12 et 15 peuvent par exemple communiquer avec le serveur 16 via des requêtes/réponses émises selon le protocole HTTP (pour HyperText Transfer Protocol en anglais).

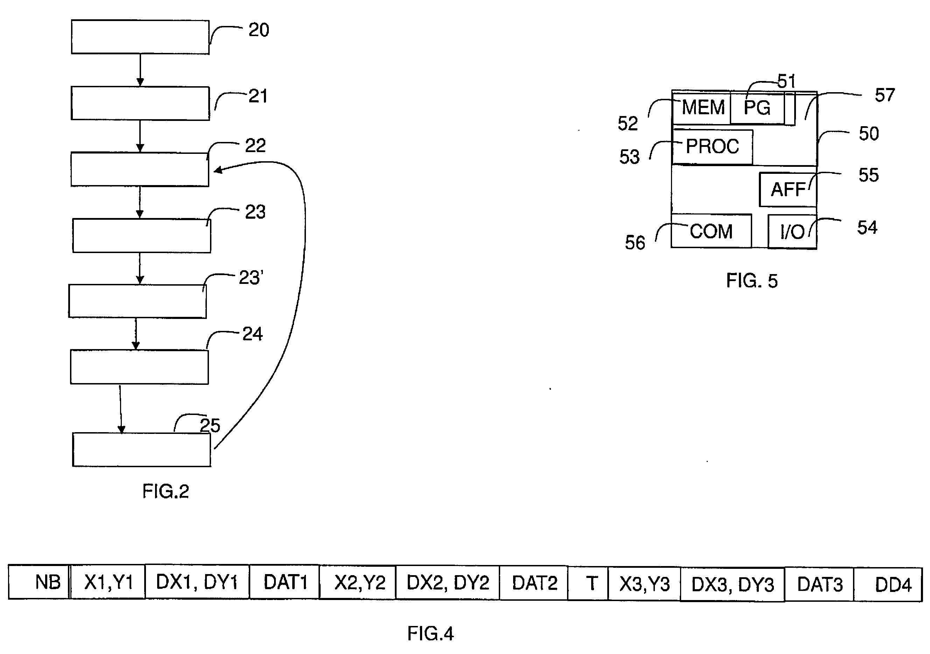

La figure 2 illustre des étapes du procédé d'enrichissement d'une communication selon un mode particulier de réalisation de l'invention. Dans le mode de réalisation décrit ici, l'invention est mise en oeuvre par le terminal 12 de la figure 1.

Lors d'une étape 20, une communication, par exemple visiophonique, est établie de manière connue entre le terminal 12 et le terminal 15, par exemple selon le protocole SIP (Session Initiation Protocol en anglais).

Lors d'une étape 21, le terminal 12, considéré par exemple comme le terminal récepteur de la communication, obtient un paramètre relatif à la communication représentatif d'une capacité du terminal émetteur 15 ou du terminal récepteur 12 ou d'une capacité d'un réseau de communication auquel est connecté le terminal émetteur ou le terminal récepteur. Par capacité d'un terminal, on entend par exemple la capacité d'affichage du terminal, la capacité de captation d'un flux vidéo du terminal, le mode de captation (portrait ou paysage) du terminal, les protocoles de transport et les codées supportés par le terminal, les fonctionnalités ou applications installées sur le terminal, les modes de communication supportés par le terminal (audio, visio, dessin partagé, messagerie instantanée, etc...).

Par capacité d'un réseau de communication, on entend notamment la bande passante du réseau de communication, la qualité de service du réseau de communication, les protocoles supportés, etc...

Selon un mode particulier de réalisation de l'invention, au cours de l'étape 21, le terminal 12 détermine que la capacité d'affichage de son écran est supérieure à la capacité nécessaire pour afficher en haute qualité le flux vidéo de la communication émis par le terminal 15.

Lors d'une étape 22, le terminal 12 détermine alors un modèle de restitution pour afficher des informations d'enrichissement en complément du flux vidéo de la communication.

Par exemple, le terminal 12 détermine un modèle de restitution tel que celui présenté en relation avec la figure 3A.

Le modèle de restitution 200 illustré par la figure 3A correspond à un affichage présentant le flux vidéo 201 de la communication émis par le terminal 15 en haut à gauche de l'écran du terminal 12, un affichage d'informations relatives à la localisation du terminal 15 à droite, par exemple une carte géographique 204 en bas et une icône 203 représentant la météo en haut, et un affichage 202 du sous-titrage de la communication audio en bas à gauche.

Selon un mode particulier de réalisation de l'invention, le terminal récepteur 12 détermine le modèle de restitution à partir d'un groupe de modèles de restitution préalablement déterminés. Les paramètres de ces modèles de restitution prédéterminés sont par exemple stockés dans une mémoire associée au terminal récepteur ou sur le serveur d'informations d'enrichissement 16. Dans ce mode particulier de réalisation de l'invention, la sélection du modèle de restitution parmi le groupe de modèles de restitution préalablement calculés est faite à partir des capacités du terminal récepteur.

Le modèle de restitution déterminé comprend des paramètres de positionnement spatial permettant de placer sur l'écran du terminal 12, les informations d'enrichissement et le flux de données vidéo de la communication selon le modèle de restitution de la figure 3A. Le modèle de restitution comprend également un paramètre de positionnement temporel associé à chaque information d'enrichissement indiquant, par rapport au début de la communication en cours, l'instant auquel l'information d'enrichissement doit être affichée et la durée pendant laquelle l'information d'enrichissement doit être affichée. Par exemple, les informations d'enrichissement concernant la localisation du terminal émetteur 15 sont affichées dès le début de la communication et pendant une durée de 5 minutes, tandis que le sous-titrage de la communication est affiché du début à la fin de la communication.

Lors d'une étape 23, le terminal 12 reçoit au moins une information d'enrichissement de la communication.

Selon un mode particulier de réalisation de l'invention, l'information d'enrichissement est envoyée par le serveur d'informations d'enrichissement 16, suite à une requête émise par le terminal 12 ou par le terminal 15. Par exemple, la requête de demande d'informations d'enrichissement envoyée au serveur 16 contient une indication de localisation du terminal 15. Sur réception de cette requête, le serveur 16 collecte des informations d'enrichissement associées à cette localisation et le transmet au terminal 12 qui les reçoit lors de l'étape 23.

Si le terminal 15 est en déplacement, une requête est émise régulièrement vers le serveur 16 par le terminal 15 en fournissant ses données de localisation dans la requête, afin que le serveur 16 fournissent régulièrement au terminal 12 des informations d'enrichissement sur la nouvelle localisation du terminal 15.

En variante, le serveur 16 peut être associé à une base de données stockant des données de trajets effectués par le terminal 15. En fonction de l'horaire d'une requête envoyée par le terminal 15, de la localisation du terminal 15 et des données de trajet stockées, le serveur 16 identifie un trajet selon lequel le terminal 15 se déplace pendant la communication avec le terminal 12. Dans cette variante, le serveur 16 envoie alors au terminal 12 des informations d'enrichissement sur le trajet ou sur les localisations futures du terminal 15.

Selon un autre exemple, la requête de demande d'informations d'enrichissement envoyée au serveur 16 contient le flux audio de la communication. Le serveur 16 envoie alors par exemple comme information d'enrichissement un texte relatif à la transcription du flux audio ou à sa traduction dans une autre langue.

La réception des informations d'enrichissement peut être renouvelée au cours de la communication, par exemple suite à une interaction de l'utilisateur UA du terminal 15, ou suite à une requête du terminal 15 ou du terminal 12 vers le serveur 16, ou suite à une adaptation des paramètres de la communication.

Lors d'une étape 24, le terminal 12 restitue les informations d'enrichissements reçues lors de l'étape 23, et le cas échéant le flux vidéo de la communication, selon le modèle de restitution déterminé à l'étape 22.

La restitution des informations d'enrichissement par le terminal 12 est par exemple mise en oeuvre au moyen d'une application affichant une interface incorporant les informations d'enrichissements et le flux vidéo de la communication aux emplacements prévus par le modèle de restitution. Les informations d'enrichissement et le flux vidéo de la communication affichés sur l'interface selon le modèle de restitution procure à l'utilisateur du terminal 12 un rendu visuel similaire au rendu visuel d'une interface affichant une vidéo sur l'écran du terminal 12. L'utilisateur du terminal 12 a ainsi l'impression de regarder une vidéo intégrant les informations d'enrichissement et le flux vidéo de la communication. L'interface peut être affichée sur la totalité de l'écran du terminal 12 pour optimiser l'utilisation des capacités d'affichage du terminal.

Selon un autre mode particulier de réalisation de l'invention, l'information d'enrichissement est déterminée en fonction du modèle de restitution déterminé lors de l'étape 22.

Selon un premier exemple, le terminal 12 envoie une requête de demande d'informations d'enrichissement comprenant des données de localisation du terminal 15 et une indication de la capacité d'affichage du terminal 12. Selon cet exemple, la détermination du modèle de restitution de l'étape 22 est mise en oeuvre par le serveur d'informations d'enrichissement 16. Le serveur d'informations d'enrichissement 16 détermine un modèle de restitution qui permet d'afficher des informations de localisation et qui soit adapté aux capacités d'affichage du terminal 12. Le serveur d'informations d'enrichissement 16 collecte ensuite des informations d'enrichissement associées à la localisation du terminal 15.

Lors de l'étape 23, le serveur d'informations d'enrichissement 16 transmet les informations d'enrichissement collectées au terminal 12, ainsi que les paramètres du modèle de restitution déterminé. Les paramètres du modèle de restitution peuvent être envoyés au terminal 12 dans un message comprenant une donnée représentative du modèle de restitution et permettant au terminal 12 d'appliquer le modèle de restitution déterminé par le serveur d'informations d'enrichissement 16.

En variante, le modèle de restitution est au préalable déterminé par le terminal 12 et transmis au serveur d'informations d'enrichissement 16.

Selon un autre mode particulier de réalisation de l'invention, le terminal 12 est un terminal disposant d'une faible capacité d'affichage, par exemple le terminal 12 est un terminal mobile. La communication entre le terminal 12 et le terminal 15 établie lors de l'étape 20 est par exemple une communication visiophonique sur un réseau à qualité non garantie. Selon ce mode particulier de réalisation de l'invention, au cours de l'étape 21, le terminal 12 détermine que ses capacités d'affichage ne permettent pas de restituer à l'utilisateur du terminal 12 à la fois le flux vidéo de la communication et des informations d'enrichissement de la communication.

Lors de l'étape 22, le terminal 12 détermine alors un modèle de restitution permettant de présenter sur l'écran du terminal des images du flux vidéo de la communication en provenance du terminal émetteur en alternance avec des images relatives à des informations d'enrichissement de la communication.

Selon ce mode particulier de réalisation de l'invention, lors de l'étape 23, des informations d'enrichissement de type images, sont obtenues par le terminal 12 en consultant par exemple un espace mémoire du terminal 12 contenant notamment des photos sur lesquelles l'utilisateur du terminal 15 est représenté. Le terminal 12 obtient les photos représentant l'utilisateur du terminal 15 par exemple à partir de métadonnées sauvegardées en association avec les photos stockées. Le terminal 12 identifie les informations d'enrichissement par exemple en mettant en correspondance les métadonnées associées aux photos stockées et l'identité de l'utilisateur du terminal 15 avec lequel la communication est en cours.

Lors de l'étape 24, les photos obtenues sont alors restituées par le terminal 12 à l'utilisateur selon le modèle de restitution déterminé à l'étape 22.

Selon un autre mode particulier de réalisation de l'invention, la communication entre le terminal 12 et le terminal 15 établie lors de l'étape 20 est par exemple une communication visiophonique. Le flux visiophonique de la communication correspond alors à l'information visuelle de la communication.

Au cours de la communication visiophonique, l'utilisateur du terminal 15 active un mode partage de contenus ou transfert de fichiers pour partager ou transférer un flux vidéo avec l'utilisateur du terminal 12 pendant la communication visiophonique. Par exemple, le terminal 15 utilise la fonctionnalité « Sharing » ou « Transfer » du standard RCS. Lors de l'étape 21, le terminal 12 obtient alors un paramètre relatif à la communication. Un tel paramètre correspond à la détection par le terminal 12 de l'activation de la fonctionnalité de partage de contenus ou de transfert de fichiers par l'utilisateur du terminal 15. Une telle détection est par exemple faite par la réception d'un message selon le standard RCS informant le terminal 12 de l'activation de la fonctionnalité de partage de contenus ou de transfert de fichiers.

Le flux vidéo d'enrichissement ajouté par le terminal 15 à la communication correspond à une information d'enrichissement de la communication. Un tel flux vidéo peut être un flux vidéo stocké sur le terminal 15 ou sur le serveur d'enrichissement 16 ou encore un flux vidéo capté en temps réel par exemple par une deuxième caméra du terminal 15 ou par un dispositif de captation associé au terminal 15, tel qu'une webcam ou autre.

Lors de l'étape 22, le terminal 12 détermine alors un modèle de restitution pour basculer la restitution du flux visiophonique de la communication en mode image et pour restituer simultanément le flux vidéo d'enrichissement ajouté à la communication par le terminal 15. La restitution du flux visiophonique de la communication en mode image peut être faite par un arrêt sur image du flux visiophonique. Seule une image du flux visiophonique est décodée et affichée par le terminal 12.

En variante, une telle image peut être mise à jour régulièrement, par exemple toutes les 5 ou 10 secondes.

En variante, le basculement de la restitution du flux visiophonique de la communication en mode image peut être faite par l'affichage d'une image de l'utilisateur du terminal 15, par exemple une image stockée sur le terminal 12. Selon cette variante, la communication entre le terminal 12 et le terminal 15 peut basculer en mode audio afin de limiter l'utilisation des ressources du réseau de communication utilisé pour la transmission des données vidéo et afin d'optimiser l'utilisation des ressources des terminaux 12 et 15.

Le flux vidéo d'enrichissement ajouté est reçu par le terminal 12 lors de l'étape 23. Lors de l'étape 24, le terminal 12 restitue le flux vidéo d'enrichissement ajouté et l'information visuelle de la communication. L'information visuelle de la communication est restituée sous la forme d'une image. Selon un mode particulier de réalisation de l'invention, lorsque la restitution du flux vidéo d'enrichissement ajouté à la communication est terminée, le terminal 12 effectue une nouvelle étape de détermination d'un modèle de restitution afin de déterminer un modèle de restitution permettant de rebasculer la restitution de l'information visuelle sous la forme d'un flux visiophonique.

Selon un autre mode particulier de réalisation de l'invention, lors de l'étape 22, le modèle de restitution est déterminé par le terminal 15.

L'information d'enrichissement peut être envoyée par le terminal 15 à l'initiative de l'utilisateur UA. Par exemple, l'utilisateur UA peut choisir d'enrichir la communication en envoyant à l'utilisateur UB du terminal 12 un document qu'il souhaite commenter au cours de la communication. Par exemple, l'utilisateur UA peut envoyer des photos, des vidéos, des fichiers textes, images, selon le protocole RCS.

Selon ce mode particulier de réalisation de l'invention, l'utilisateur du terminal 15 sélectionne par exemple un ensemble d'images à transmettre au terminal 12. Les images à transmettre au terminal 12 peuvent être stockées sur le terminal 15 et transmises au terminal 12. En variante, les images à transmettre au terminal 12 sont stockées sur un serveur en ligne du réseau de communication 10, par exemple le serveur d'informations d'enrichissement 16, et le terminal 15 y accède via une adresse électronique de type URL (pour Uniform Ressource Locator en anglais).

Lors de l'étape 21, le terminal 15 détermine que des informations d'enrichissement de la communication vont être transmises au terminal 12, par exemple par la détection de l'activation de la fonction de partage de document « Sharing » de l'application de téléphonie du terminal 15. Dans ce mode particulier de réalisation de l'invention, au moins une information d'enrichissement à transmettre correspond à un paramètre relatif à la communication.

Lors de l'étape 22, le terminal 15 détermine alors un modèle de restitution permettant d'afficher au moins les informations d'enrichissement sélectionnées par l'utilisateur du terminal 15. Par exemple, le modèle de restitution déterminé comprend des paramètres permettant d'afficher une image de l'ensemble d'images à intervalle régulier et pendant une durée prédéterminée.

Le modèle de restitution déterminé lors des étapes 22 décrites précédemment correspond par exemple au modèle de restitution 210 illustré par la figure 3B. Le modèle de restitution 210 comprend dans sa partie centrale une zone de présentation 212 dans laquelle l'interface de restitution affiche des images ou des vidéos transmises par le terminal 15 ou sélectionnées par le terminal 15 sur le serveur 16 et transmises par le serveur 16. Sur la partie gauche, le modèle de restitution comprend une zone de présentation 211 dans laquelle l'interface de restitution affiche une photo représentant l'utilisateur du terminal 15. La photo représentant l'utilisateur du terminal 15 peut être une photo envoyée par le terminal 15 lors de l'établissement de la communication lors de l'étape 20 ou une photo stockée dans un carnet d'adresse du terminal 12 en association avec les coordonnées de l'utilisateur du terminal 15. La zone de présentation 211 peut également être utilisée pour afficher le flux vidéo de la communication dans le cas d'une communication visiophonique.

Sur la partie droite, le modèle de restitution 210 comprend une zone d'interaction 213 dans laquelle l'interface de restitution affiche des menus interactifs permettant à l'utilisateur du terminal 12 d'interagir sur l'interface.

Lors de l'étape 23, le terminal 12 reçoit les informations d'enrichissement, ici les images sélectionnées par l'utilisateur du terminal 15, en provenance du terminal 15 ou du serveur 16.

Dans ce mode particulier de réalisation de l'invention, lors d'une étape 23' représentée à la figure 2, le terminal 12 reçoit une donnée représentative du modèle de restitution déterminé à l'étape 22. La donnée représentative du modèle de restitution permet au terminal 12 d'obtenir le modèle de restitution déterminé. Par exemple, la donnée représentative correspond à un identifiant d'un modèle de restitution permettant d'identifier le modèle de restitution déterminé par le terminal 15 parmi un groupe de modèle de restitution stocké sur le terminal 12.

En variante, la donnée représentative du modèle de restitution comprend les paramètres du modèle de restitution que l'interface de restitution du terminal 12 doit appliquer pour restituer les informations d'enrichissement et les données visuelles de la communication.

La donnée représentative du modèle de restitution est par exemple envoyée dans un champ d'un message de la communication entre le terminal 15 et le terminal 12. La partie relative au modèle de restitution d'un tel message est par exemple illustrée par la figure 4.

Le message illustré en figure 4 comprend un premier champ NB indiquant le nombre de zone que l'interface de restitution doit afficher sur l'écran du terminal 12. Dans le mode particulier de réalisation de l'invention, ce champ prend la valeur 3. Le message comprend ensuite des paramètres de positionnement spatiaux (X1, Y1, X2, Y2 et X3, Y3) de chaque zone à afficher, ainsi que la taille horizontale et verticale de chaque zone (DX1, DY1, DX2, DY2, DX3, DY3). Le message comprend également pour chaque zone, le type de données à afficher dans cette zone (DAT1, DAT2, DAT3). Le type de données correspond par exemple à une image, une vidéo, un texte, un fichier audio, une zone d'interaction. Un champ de type de données du message peut également correspondre à plusieurs types de données. Par exemple, dans le mode particulier de réalisation décrit ici, le champ DAT2 prend une valeur indiquant une zone d'affichage d'un ensemble d'images. En fonction du type de données à afficher, le champ de type de données peut être suivi d'un ou plusieurs paramètres. Dans ce mode particulier de réalisation, le champ DAT2 est suivi du paramètre T indiquant une durée pendant laquelle chaque image de l'ensemble doit rester afficher avant de présenter la prochaine image de l'ensemble sur l'écran. Toujours dans ce mode particulier de réalisation, le champ DAT3 est suivi d'un groupe de paramètre DD4 précisant les menus à afficher dans la zone d'interaction 213 représentée sur la figure 3B et les actions associées à chaque menu. Par exemple, le groupe de paramètre DD4 indique que la zone d'interaction 213 comprend un menu « ouvrir qui permet à l'utilisateur du terminal 12 de rechercher sur son terminal un fichier stocké dans la mémoire de son terminal et de l'afficher dans la zone centrale 212.

Dans le mode particulier de réalisation de l'invention décrit ici, lors de l'étape 24 de la figure 2, le terminal 12 restitue les informations d'enrichissement selon le modèle de restitution obtenu lors de l'étape 23'.

Selon un mode particulier de réalisation de l'invention, l'interface permettant de restituer les informations d'enrichissement et le flux vidéo de la communication selon un modèle de restitution, est une interface interactive sur laquelle l'utilisateur du terminal 12 peut interagir.

L'interface peut comprendre une zone d'interaction dans laquelle l'utilisateur peut sélectionner des menus associés à des actions, par exemple la zone d'interaction 213 décrite en relation avec la figure 3B.

En variante, chaque zone de présentation peut être interactive. Par exemple, en relation avec la figure 3B, lorsque l'utilisateur du terminal 12 interagit sur la zone 211, un menu proposant des actions possibles pour cette zone s'affiche. L'utilisateur peut sélectionner des informations d'enrichissement à afficher associées à son interlocuteur telles qu'une autre photo ou l'affichage du flux vidéo de la communication.

Selon un autre exemple, lorsque l'utilisateur du terminal 12 interagit sur la zone 212. un menu permettant à l'utilisateur d'afficher un autre document s'affiche. L'utilisateur peut alors rechercher dans la mémoire du terminal 12 un document à afficher dans la zone 212. L'utilisateur peut également saisir une URL dans le champ d'adresse du menu, permettant d'afficher une page Internet correspondant à l'URL saisie.

La zone d'interaction 213 peut également comprendre un menu permettant à l'utilisateur du terminal 12 de modifier le modèle de restitution utilisé par l'interface du terminal 12.

Par exemple, si le modèle de restitution implique la restitution du flux vidéo de la communication dans la partie centrale 212 de l'interface mais que l'utilisateur du terminal 12 ne souhaite pas l'affichage de la vidéo de son interlocuteur sur une grande partie de son écran, l'utilisateur du terminal 12 sélectionne un nouveau modèle de restitution. Par exemple l'utilisateur sélectionne un modèle de restitution affichant des informations de localisation selon le modèle illustré par la figure 3A.

Dans ce mode particulier de réalisation de l'invention, suite à l'interaction de l'utilisateur sur l'interface de restitution lors d'une étape 25 représentée à la figure 2, le terminal 12 adapte le modèle de restitution en fonction de l'interaction de l'utilisateur. L'adaptation du modèle de restitution correspond à la détermination d'un nouveau modèle de restitution. La détermination d'un nouveau modèle de restitution est mise en oeuvre de la même manière qu'à l'étape 23 de détermination du modèle de restitution initial en prenant en compte l'interaction de l'utilisateur en tant que paramètre relatif à la communication.

Selon un autre mode particulier de réalisation de l'invention, l'étape 25 correspond à l'occurrence d'un évènement déclencheur d'une itération de l'étape 23. L'évènement déclencheur correspond par exemple à la détection de la modification d'un paramètre relatif à la communication.

Par exemple, si le modèle de restitution déterminé initialement comprend la restitution sur une large partie de l'écran du terminal 12 du flux vidéo de la communication et que la bande passante du réseau de communication auquel est connecté le terminal 15 chute, le terminal 12 détecte une modification d'un paramètre relatif à la communication en cours, ici la diminution de la bande passante. Le terminal 12 détermine alors lors de l'étape 23 un nouveau modèle de restitution selon le paramètre de communication modifié.

Le terminal 12 détermine par exemple un modèle de restitution permettant d'afficher des informations d'enrichissement fournies par le serveur d'enrichissement 16 en alternance avec des images issues du flux vidéo de la communication.

Selon un autre exemple, le paramètre relatif à la communication correspond à la réception par le terminal 12 d'une information d'enrichissement transmise par le terminal 15 ou par le serveur d'enrichissement 16. Par exemple, si au cours de la communication, l'utilisateur du terminal 15 a activé la transmission de sa localisation, la localisation du terminal 15 est transmise au terminal 12 dans un message de la communication. Lors d'une nouvelle étape 23, le terminal 12 détermine alors un nouveau modèle de restitution permettant d'afficher des informations relatives à la localisation du terminal 15.

La figure 5 illustre un dispositif permettant de mettre en oeuvre le procédé d'enrichissement d'une communication selon un mode particulier de réalisation de l'invention.

Le dispositif 50 comprend un module de traitement de données 57 comprenant un espace de stockage 52, par exemple une mémoire (MEM), une unité de traitement 53, équipée par exemple d'un microprocesseur (PROC), et pilotée par le programme d'ordinateur (PG) 51 mettant en oeuvre le procédé d'enrichissement d'une communication tel que décrit dans l'invention en relation avec la figure 2.

A l'initialisation, les instructions de code du programme d'ordinateur 51 sont par exemple chargées en mémoire avant d'être exécutées par le processeur de l'unité de traitement 53. Le microprocesseur de l'unité de traitement 53 met en oeuvre, selon les instructions du programme d'ordinateur 51, les étapes du procédé d'enrichissement d'une communication établie entre au moins un terminal émetteur et un terminal récepteur, et notamment :
- l'étape de réception par le terminal récepteur d'au moins une information d'enrichissement,
- l'étape d'obtention d'un paramètre relatif à la communication,
- l'étape de détermination en fonction du paramètre relatif à la communication, d'un modèle de restitution permettant de positionner, sur un dispositif d'affichage associé au terminal récepteur ladite information d'enrichissement et une information visuelle de la communication, ledit modèle de restitution déterminé comprenant au moins un paramètre de positionnement spatial associé à ladite information d'enrichissement, -et l'étape de restitution, sur le dispositif d'affichage associé au terminal récepteur, de ladite information d'enrichissement et de l'information visuelle de la communication, selon le modèle de restitution déterminé.

Selon un mode particulier de réalisation de l'invention, un tel modèle de restitution comprend également un paramètre temporel associé à ladite information d'enrichissement.

Selon un mode particulier de réalisation de l'invention, le dispositif 50 comprend également des moyens d'interaction utilisateur 54 (I/O) permettant à l'utilisateur d'interagir avec le dispositif 50, par exemple pour modifier un modèle de restitution, ou sélectionner des informations à restituer dans un modèle de restitution. Les moyens d'interaction utilisateur 54 sont par exemple mis en oeuvre au moyen d'une interface utilisateur. Cette interface utilisateur peut correspondre à un clavier, une souris, ou un écran tactile.

Le dispositif 50 comprend des moyens de restitution 55 d'informations d'enrichissement et de données de communication. Les moyens de restitution sont par exemple mis oeuvre par un module d'affichage (AFF) qui correspond au dispositif d'affichage associé au terminal récepteur.

Le module d'affichage peut par exemple correspondre à un écran intégré au terminal récepteur. Le module d'affichage peut également correspondre à une interface communiquant avec un dispositif d'affichage déporté. Par exemple le terminal récepteur peut utiliser un écran déporté pour l'affichage des informations d'enrichissement et de l'information visuelle de la communication afin de bénéficier de capacités d'affichage supérieure aux capacités d'affichage qu'il supporte.

Le dispositif comporte aussi des moyens de communication 56. Les moyens de communications sont par exemple mis en oeuvre par un module de communication (COM). Le module de communication permet notamment au dispositif 50 d'établir des communications via un réseau de communication 10 ou 14 de la figure 1, et de recevoir des informations d'enrichissement en provenance d'un terminal 15 ou d'un serveur d'enrichissement 16.

Le dispositif 50 est compris dans un terminal, tel que par exemple le terminal 12 de la figure 1. Plus généralement, le dispositif 50 est compris dans un terminal tel que par exemple un ordinateur personnel, fixe ou mobile, un téléphone mobile, une tablette, une télévision connectée, un smartphone, etc...

Selon un mode particulier de réalisation de l'invention, le dispositif 50 est compris dans un serveur.

## Revendications

1. Procédé d'enrichissement d'une communication établie entre au moins un terminal émetteur (15) et un terminal récepteur (12), comprenant une étape de réception (23) par le terminal récepteur d'au moins une information d'enrichissement, le procédé est **caractérisé en ce qu'**il comprend:
- une étape d'obtention (21) d'au moins un paramètre relatif à la communication,
- une étape de détermination (22), en fonction du paramètre relatif à la communication obtenu, d'au moins un modèle de restitution permettant de positionner, sur un dispositif d'affichage associé au terminal récepteur, au moins ladite information d'enrichissement et une information visuelle de la communication,
- une étape de restitution (24), sur le dispositif d'affichage associé au terminal récepteur, de ladite information d'enrichissement et de l'information visuelle de la communication, selon le modèle de restitution déterminé.

2. Procédé d'enrichissement d'une communication selon la revendication 1 **caractérisé en ce que**, lorsque l'information visuelle de la communication correspond à un flux visiophonique de la communication et lorsque le paramètre relatif à la communication correspond à l'ajout d'un flux vidéo d'enrichissement à la communication, le modèle de restitution déterminé correspond à un modèle de restitution permettant de restituer l'information visuelle de la communication sous la forme d'une image issue du flux visiophonique ou sous la forme d'une image d'un utilisateur du terminal émetteur.

3. Procédé d'enrichissement d'une communication selon la revendication 2 **caractérisé en ce que** lorsque la restitution du flux vidéo d'enrichissement ajouté est terminée, l'étape de détermination d'un modèle de restitution est itérée pour déterminer un nouveau modèle de restitution permettant de restituer l'information visuelle de la communication sous la forme d'un flux visiophonique.

4. Procédé d'enrichissement d'une communication selon l'une quelconque des revendications 1 à 3 **caractérisé en ce que** le modèle de restitution déterminé comprend un paramètre temporel associé à ladite information d'enrichissement.

5. Procédé d'enrichissement d'une communication selon l'une quelconque des revendications 1 à 4 **caractérisé en ce que** le modèle de restitution est déterminé pour un intervalle de temps prédéterminé ou jusqu'à l'occurrence d'un évènement déclencheur d'une itération de l'étape de détermination d'un modèle de restitution.

6. Procédé d'enrichissement d'une communication selon la revendication 5 **caractérisé en ce que** l'évènement déclencheur d'une itération de l'étape de détermination d'un modèle de restitution correspond à la détection de la modification d'au moins un paramètre relatif à la communication.

7. Procédé d'enrichissement d'une communication selon la revendication 5 **caractérisé en ce que** l'évènement déclencheur d'une itération de l'étape de détermination d'un modèle de restitution correspond à une interaction utilisateur effectuée sur le terminal récepteur.

8. Procédé d'enrichissement d'une communication selon l'une quelconque des revendications 1 à 7 **caractérisé en ce que** le modèle de restitution est déterminé par une sélection d'un modèle de restitution parmi un groupe de modèles de restitution préalablement déterminés, ladite sélection étant effectuée en fonction de l'information d'enrichissement ou des capacités du terminal récepteur.

9. Procédé d'enrichissement d'une communication selon l'une quelconque des revendications 1 à 8 **caractérisé en ce que** l'information d'enrichissement reçue est définie en fonction du modèle de restitution déterminé.

10. Procédé d'enrichissement d'une communication selon l'une quelconque des revendications 1 à 9 **caractérisé en ce que** le modèle de restitution est déterminé par le terminal émetteur.

11. Procédé d'enrichissement d'une communication selon l'une quelconque des revendications 1 à 10 **caractérisé en ce qu'**il comprend une étape d'envoi au terminal récepteur d'une donnée représentative du modèle de restitution déterminé.

12. Dispositif d'enrichissement d'une communication établie entre au moins un terminal émetteur et un terminal récepteur, comprenant des moyens de réception d'au moins une information d'enrichissement, le dispositif étant **caractérisé en ce qu'**il comprend:
- des moyens d'obtention d'un paramètre relatif à la communication,
- des moyens de détermination, en fonction du paramètre relatif à la communication, d'un modèle de restitution permettant de positionner, sur un dispositif d'affichage associé au terminal récepteur, ladite information d'enrichissement et une information visuelle de la communication ,
- des moyens de restitution de ladite information d'enrichissement et de l'information visuelle de la communication, selon le modèle de restitution déterminé.

13. Terminal comprenant un dispositif selon la revendication 12.

14. Message à destination d'un terminal récepteur, émis au cours d'une communication établie entre le terminal récepteur et au moins un terminal émetteur, le terminal récepteur recevant au moins une information d'enrichissement de la communication, le message est **caractérisé en ce qu'**il comprend au moins une donnée représentative d'un modèle de restitution déterminé en fonction d'un paramètre relatif à la communication et permettant de positionner, sur un dispositif d'affichage associé au terminal récepteur, ladite information d'enrichissement et une information visuelle de la communication, ladite information d'enrichissement et l'information visuelle de la communication étant restitués selon le modèle de restitution déterminé, sur le dispositif d'affichage associé au terminal récepteur.

15. Programme d'ordinateur comportant des instructions de code de programme pour l'exécution des étapes du procédé d'enrichissement d'une communication selon l'une quelconque des revendications 1 à 11, lorsque le programme est exécuté par un processeur.

## Patentansprüche

1. Verfahren zur Anreicherung einer zwischen mindestens einem Sendeendgerät (15) und einem Empfangsendgerät (12) aufgebauten Kommunikation, das einen Empfangsschritt (23) mindestens einer Anreicherungsinformation durch das Empfangsendgerät enthält, wobei das Verfahren **dadurch gekennzeichnet ist, dass** es enthält:
- einen Schritt des Erhalts (21) mindestens eines Parameters bezüglich der Kommunikation,
- einen Schritt der Bestimmung (22), abhängig vom erhaltenen Parameter bezüglich der Kommunikation, mindestens eines Wiedergabemodells, das es ermöglicht, auf einer dem Empfangsendgerät zugeordneten Anzeigevorrichtung mindestens die Anreicherungsinformation und eine visuelle Information der Kommunikation zu positionieren,
- einen Schritt der Wiedergabe (24), auf der dem Empfangsendgerät zugeordneten Anzeigevorrichtung, der Anreicherungsinformation und der visuellen Information der Kommunikation, gemäß dem bestimmten Wiedergabemodell.

2. Verfahren zur Anreicherung einer Kommunikation nach Anspruch 1, **dadurch gekennzeichnet, dass**, wenn die visuelle Information der Kommunikation einem Bildtelefon-Strom der Kommunikation entspricht, und wenn der Parameter bezüglich der Kommunikation der Hinzufügung eines Anreicherungs-Videostroms zur Kommunikation entspricht, das bestimmte Wiedergabemodell einem Wiedergabemodell entspricht, das es ermöglicht, die visuelle Information der Kommunikation in Form eines vom Bildtelefon-Strom stammenden Bilds oder in Form eines Bilds eines Benutzers des Sendeendgeräts wiederzugeben.

3. Verfahren zur Anreicherung einer Kommunikation nach Anspruch 2, **dadurch gekennzeichnet, dass**, wenn die Wiedergabe des hinzugefügten Anreicherungs-Videostroms beendet ist, der Schritt der Bestimmung eines Wiedergabemodells wiederholt wird, um ein neues Wiedergabemodell zu bestimmen, das es ermöglicht, die visuelle Information der Kommunikation in Form eines Bildtelefon-Stroms wiederzugeben.

4. Verfahren zur Anreicherung einer Kommunikation nach einem der Ansprüche 1 bis 3, **dadurch gekennzeichnet, dass** das bestimmte Wiedergabemodell einen zeitlichen Parameter enthält, der der Anreicherungsinformation zugeordnet ist.

5. Verfahren zur Anreicherung einer Kommunikation nach einem der Ansprüche 1 bis 4, **dadurch gekennzeichnet, dass** das Wiedergabemodell für ein vorbestimmtes Zeitintervall oder bis zum Auftreten eines Auslöseereignisses einer Iteration des Bestimmungsschritts eines Wiedergabemodells bestimmt wird.

6. Verfahren zur Anreicherung einer Kommunikation nach Anspruch 5, **dadurch gekennzeichnet, dass** das Auslöseereignis einer Iteration des Bestimmungsschritts eines Wiedergabemodells der Erfassung der Änderung mindestens eines Parameters bezüglich der Kommunikation entspricht.

7. Verfahren zur Anreicherung einer Kommunikation nach Anspruch 5, **dadurch gekennzeichnet, dass** das Auslöseereignis einer Iteration des Bestimmungsschritts eines Wiedergabemodells einer auf dem Empfangsendgerät ausgeführten Benutzer-Interaktion entspricht.

8. Verfahren zur Anreicherung einer Kommunikation nach einem der Ansprüche 1 bis 7, **dadurch gekennzeichnet, dass** das Wiedergabemodell durch eine Auswahl eines Wiedergabemodells aus einer Gruppe von vorher bestimmten Wiedergabemodellen bestimmt wird, wobei die Auswahl abhängig von der Anreicherungsinformation oder Kapazitäten des Empfangsendgeräts ausgeführt wird.

9. Verfahren zur Anreicherung einer Kommunikation nach einem der Ansprüche 1 bis 8, **dadurch gekennzeichnet, dass** die empfangene Anreicherungsinformation abhängig vom bestimmten Wiedergabemodell definiert wird.

10. Verfahren zur Anreicherung einer Kommunikation nach einem der Ansprüche 1 bis 9, **dadurch gekennzeichnet, dass** das Wiedergabemodell vom Sendeendgerät bestimmt wird.

11. Verfahren zur Anreicherung einer Kommunikation nach einem der Ansprüche 1 bis 10, **dadurch gekennzeichnet, dass** es einen Schritt des Sendens eines für das bestimmte Wiedergabemodell repräsentativen Datenwerts an das Empfangsendgerät enthält.

12. Vorrichtung zur Anreicherung einer zwischen mindestens einem Sendeendgerät und einem Empfangsendgerät aufgebauten Kommunikation, die Empfangseinrichtungen mindestens einer Anreicherungsinformation enthält, wobei die Vorrichtung **dadurch gekennzeichnet, dass** sie enthält:
- Einrichtungen zum Erhalt eines Parameters bezüglich der Kommunikation,
- Einrichtungen zur Bestimmung, abhängig vom Parameter bezüglich der Kommunikation, eines Wiedergabemodells, das es ermöglicht, auf einer dem Empfangsendgerät zugeordneten Anzeigevorrichtung die Anreicherungsinformation und eine visuelle Information der Kommunikation zu positionieren,
- Einrichtungen zur Wiedergabe der Anreicherungsinformation und der visuellen Information der Kommunikation gemäß dem bestimmten Wiedergabemodell.

13. Endgerät, das eine Vorrichtung nach Anspruch 12 enthält.

14. Mitteilung für ein Empfangsendgerät, die während einer zwischen dem Empfangsendgerät und mindestens einem Sendeendgerät aufgebauten Kommunikation gesendet wird, wobei das Empfangsendgerät mindestens eine Anreicherungsinformation der Kommunikation empfängt, wobei die Mitteilung **dadurch gekennzeichnet ist, dass** sie mindestens einen für ein Wiedergabemodell repräsentativen Datenwert enthält, das abhängig von einem Parameter bezüglich der Kommunikation bestimmt wird und es ermöglicht, auf einer dem Empfangsendgerät zugeordneten Anzeigevorrichtung die Anreicherungsinformation und eine visuelle Information der Kommunikation zu positionieren, wobei die Anreicherungsinformation und die visuelle Information der Kommunikation gemäß dem bestimmten Wiedergabemodell auf der dem Empfangsendgerät zugeordneten Anzeigevorrichtung wiedergegeben werden.

15. Computerprogramm, das Programmcodeanweisungen zur Ausführung der Schritte des Anreicherungsverfahrens einer Kommunikation nach einem der Ansprüche 1 bis 11 aufweist, wenn das Programm von einem Prozessor ausgeführt wird.

## Claims

1. Method for enriching a communication established between at least one sender terminal (15) and a receiver terminal (12), comprising a step of reception (23) by the receiver terminal of at least one item of enrichment information, the method is **characterized in that** it comprises:
- a step of obtaining (21) at least one parameter relating to the communication,
- a step of determining (22), as a function of the parameter obtained relating to the communication, at least one rendering model making it possible to position, on a display device associated with the receiver terminal, at least said item of enrichment information and an item of visual information in respect of the communication,
- a step of rendering (24), on the display device associated with the receiver terminal, said item of enrichment information and the item of visual information in respect of the communication, according to the rendering model determined.

2. Method for enriching a communication according to Claim 1, **characterized in that**, when the item of visual information in respect of the communication corresponds to a videophone stream of the communication and when the parameter relating to the communication corresponds to the addition of an enrichment video stream to the communication, the rendering model determined corresponds to a rendering model making it possible to retrieve the item of visual information in respect of the communication in the form of an image arising from the videophone stream or in the form of an image of a user of the sender terminal.

3. Method for enriching a communication according to Claim 2, **characterized in that** when the rendering of the added enrichment video stream is terminated, the step of determining a rendering model is iterated to determine a new rendering model making it possible to retrieve the item of visual information in respect of the communication in the form of a videophone stream.

4. Method for enriching a communication according to any one of Claims 1 to 3, **characterized in that** the rendering model determined comprises a temporal parameter associated with said item of enrichment information.

5. Method for enriching a communication according to any one of Claims 1 to 4, **characterized in that** the rendering model is determined for a predetermined time interval or until the occurrence of a trigger event of an iteration of the step of determining a rendering model.

6. Method for enriching a communication according to Claim 5, **characterized in that** the trigger event of an iteration of the step of determining a rendering model corresponds to the detection of the modification of at least one parameter relating to the communication.

7. Method for enriching a communication according to Claim 5, **characterized in that** the trigger event of an iteration of the step of determining a rendering model corresponds to a user interaction performed on the receiver terminal.

8. Method for enriching a communication according to any one of Claims 1 to 7, **characterized in that** the rendering model is determined by a selection of a rendering model from among a group of previously determined rendering models, said selection being performed as a function of the item of enrichment information or of the capabilities of the receiver terminal.

9. Method for enriching a communication according to any one of Claims 1 to 8, **characterized in that** the item of enrichment information received is defined as a function of the rendering model determined.

10. Method for enriching a communication according to any one of Claims 1 to 9, **characterized in that** the rendering model is determined by the sender terminal.

11. Method for enriching a communication according to any one of Claims 1 to 10, **characterized in that** it comprises a step of dispatching to the receiver terminal an item of data representative of the rendering model determined.

12. Device for enriching a communication established between at least one sender terminal and a receiver terminal, comprising means for receiving at least one item of enrichment information, the device being **characterized in that** it comprises:
- means for obtaining a parameter relating to the communication,
- means for determining, as a function of the parameter relating to the communication, a rendering model making it possible to position, on a display device associated with the receiver terminal, said item of enrichment information and an item of visual information in respect of the communication,
- means for retrieving said item of enrichment information and the item of visual information in respect of the communication, according to the rendering model determined.

13. Terminal comprising a device according to Claim 12.

14. Message destined for a receiver terminal, sent in the course of a communication established between the receiver terminal and at least one sender terminal, the receiver terminal receiving at least one item of enrichment information in respect of the communication, the message is **characterized in that** it comprises at least one item of data representative of a rendering model determined as a function of a parameter relating to the communication and making it possible to position, on a display device associated with the receiver terminal, said item of enrichment information and an item of visual information in respect of the communication, said item of enrichment information and the item of visual information in respect of the communication being retrieved according to the rendering model determined, on the display device associated with the receiver terminal.

15. Computer program comprising program code instructions for the execution of the steps of the method for enriching a communication according to any one of Claims 1 to 11, when the program is executed by a processor.
